# EUROPÄISCHE PATENTANMELDUNG

(11) **EP 3 644 025 A1**
(43) Veröffentlichungstag der Anmeldung: **29.04.2020**
(21) Anmeldenummer: 18202595.7
(22) Anmeldetag: 25.10.2018
(51) Int. Cl.: G01F 23/284, G01S 13/88

(54) **RADAR-FÜLLSTANDMESSGERÄT**

(71) Anmelder: VEGA Grieshaber KG, 77709 Wolfach (DE)
(72) Erfinder: WELLE, Roland, 77756 Hausach (DE); FISCHER, Michael, 72275 Alpirsbach (DE)
(74) Vertreter: Maiwald Patent- und Rechtsanwaltsgesellschaft mbH

(57) **Zusammenfassung**

Es wird ein Füllstandmessgerät (105) zur Ermittlung eines Füllstandes eines Mediums vorgeschlagen, welches ein Radarmodul (204) zum Aussenden eines Sendesignals und zum Empfangen eines an dem Medium reflektierten Empfangssignals, eine Steuereinheit (214), welche dazu eingerichtet ist, basierend auf dem Empfangssignal ein mit dem Füllstand korrelierendes Messsignal zu ermitteln, und eine Detektionseinheit (220) aufweist, die dazu eingerichtet ist, ein eine Bewegung des Füllstandmessgeräts (105) indizierendes Bewegungssignal und/oder ein eine geographische Position des Füllstandmessgeräts (105) indizierendes Positionssignal zu ermitteln. Die Steuereinheit (214) weist eine Aktivierungseinheit (216) auf, welche dazu eingerichtet ist, das Radarmodul (204) zumindest teilweise in Abhängigkeit des von der Detektionseinheit (220) ermittelten Bewegungssignals und/oder Positionssignals zu aktivieren und/oder zu deaktivieren.

## Beschreibung

### Gebiet der Erfindung

Die Erfindung betrifft ein Füllstandmessgerät zur Ermittlung eines Füllstandes eines Mediums, welches nach dem Radarprinzip arbeitet. Ferner betrifft die Erfindung die Verwendung eines solchen Füllstandmessgeräts als Grenzstandschalter zur Erfassung eines Grenzstandes des Mediums. Des Weiteren betrifft die Erfindung ein Verfahren zum Betreiben eines solchen Füllstandmessgerätes.

### Hintergrund der Erfindung

Bekannte Füllstandmessgeräte zur Bestimmung eines Füllstandes unter Verwendung hochfrequenter elektromagnetischer Signale, insbesondere unter Verwendung von Radarsignalen, werden im Allgemeinen innerhalb einer Industrieanlage auf oder an ortsfesten Behältern betrieben.

Der Betrieb radarbasierter Füllstandmessgeräte basiert auf dem Aussenden und Empfangen hochfrequenter elektromagnetischer Radarsignale, typischerweise in den Frequenzbereichen zwischen 6 GHz und 24 GHz, zwischen 57 GHz und 64 GHz und/oder zwischen 75 GHz und 85 GHz, aber auch höhere Frequenzen sind möglich. Die Nutzung dieser Frequenzbereiche wird in einigen Ländern, insbesondere in Europa, in den USA und in Kanada, unter Berücksichtigung der Anforderungen einschlägiger Normen bzw. gesetzlicher Bestimmungen (z.B. EN 302 729 LPR-Norm, FCC CFR §15.256) gestattet. Unter anderem schreiben derartige Normen vor, dass das Füllstandmessgerät nur an einem festen Ort betrieben werden soll. Ein Betrieb während einer Bewegung oder innerhalb eines bewegten Behälters ist hingegen nicht erlaubt. Ferner dürfen radarbasierte Füllstandmessgeräte in einem definierten Umkreis und/oder einer definierten Umgebung um geschützte Einrichtungen, wie z.B. in einem Umkreis von Radioastronomiestationen, nicht betrieben werden, etwa um Störungen der Einrichtungen zu vermeiden.

In der Regel werden Anwender bzw. Benutzer von Füllstandmessgeräten in der Gerätedokumentation darauf hingewiesen, dass die voranstehend erläuterten Normen zu berücksichtigen sind, was bei ortsfest betriebenen Füllstandmessgeräten und/oder ortsfesten Anlagen in der Regel ohne Schwierigkeiten gewährleistet werden kann.

### Zusammenfassung der Erfindung

Mit Ausführungsformen der Erfindung kann in vorteilhafter Weise ein verbessertes Füllstandmessgerät bereitgestellt werden, welches sicher und zuverlässig betrieben werden kann.

Dies wird insbesondere durch die Gegenstände der unabhängigen Patentansprüche ermöglicht. Weiterbildungen der Erfindung ergeben sich aus den Unteransprüchen und der nachfolgenden Beschreibung.

Die nachfolgende Beschreibung betrifft gleichermaßen das Füllstandmessgerät, die Verwendung des Füllstandmessgeräts als Grenzstandschalter sowie das Verfahren. Merkmale, Elemente und/oder Schritte, welche nachfolgend mit Bezug auf die Füllstandmessgerät, die Verwendung desselben oder das Verfahren beschrieben sind, gelten gleichermaßen für das Füllstandmessgerät, die Verwendung desselben und das Verfahren.

Ein erster Aspekt der Erfindung betrifft ein Füllstandmessgerät und/oder ein Radarfüllstandmessgerät zur Ermittlung eines Füllstandes eines Mediums, beispielsweise einer Flüssigkeit und/oder eines Schüttguts. Das Füllstandmessgerät kann etwa zur Ermittlung des Füllstandes des Mediums in einem Behälter ausgestaltet sein. Das Füllstandmessgerät weist ein Radarmodul zum Aussenden eines Sendesignals und zum Empfangen eines an dem Medium reflektierten Empfangssignals auf. Weiter weist das Füllstandmessgerät eine Steuereinheit auf, welche dazu eingerichtet ist, basierend auf dem Empfangssignal und/oder basierend auf einer Verarbeitung des Empfangssignals ein mit dem Füllstand korrelierendes Messsignal zu ermitteln. Des Weiteren weist das Füllstandmessgerät eine Detektionseinheit auf, die dazu eingerichtet ist, ein eine Bewegung des Füllstandmessgeräts indizierendes Bewegungssignal und/oder ein eine geographische Position des Füllstandmessgeräts indizierendes Positionssignal zu ermitteln, wobei die Steuereinheit eine Aktivierungseinheit aufweist, welche dazu eingerichtet ist, das Radarmodul zumindest teilweise in Abhängigkeit des von der Detektionseinheit ermittelten Bewegungssignals und/oder Positionssignals zu betätigen, zu aktivieren und/oder zu deaktivieren. Gleichsam kann die Aktivierungseinheit dazu eingerichtet sein, das Radarmodul zumindest teilweise basierend auf dem von der Detektionseinheit ermittelten Bewegungssignal und/oder dem Positionssignal zu betätigen, zu aktivieren und/oder zu deaktivieren.

Allgemein kann das Füllstandmessgerät in vorteilhafter Weise zur Bestimmung des Füllstandes eines Mediums in einem ortsfesten und/oder in einem transportablen bzw. ortsveränderlichen Behälter eingerichtet sein. Mit anderen Worten kann das Füllstandmessgerät dazu eingerichtet sein, in und/oder an einem Behälter angeordnet zu werden, wobei der Behälter ortsfest und/oder transportabel sein kann.

Aufgrund der Ermittlung des Bewegungssignals und/oder des Positionssignals durch die Detektionseinheit sowie aufgrund der zumindest teilweisen Aktivierung und/oder Deaktivierung zumindest eines Teils des Radarmoduls kann in vorteilhafter Weise sichergestellt und/oder gewährleistet sein, dass gesetzliche Bestimmungen und/oder Normen, etwa europäische und/oder nordamerikanische Zulassungsnormen für radarbasierte Füllstandmessgeräte, eingehalten werden können. Derartige Normen können durch das Füllstandmessgerät insbesondere eingehalten werden, ohne dass hierfür eine Bedienung und/oder Betätigung des Füllstandmessgeräts durch einen Bediener und/oder Anwender des Füllstandmessgeräts erforderlich wäre. Dies ermöglicht wiederum einen autonomen und/oder autarken Betrieb des Füllstandmessgeräts. Letzteres kann wiederum zu einer Kostenersparnis führen, beispielsweise da kein Personal zur Aktivierung und/oder Deaktivierung vorgehalten werden muss. Insgesamt kann daher durch die vorliegende Erfindung ein verbessertes Füllstandmessgerät bereitgestellt werden, welches sicher und zuverlässig betrieben werden kann, insbesondere unter Einhaltung gesetzlicher Vorschriften und/oder Normen für den Betrieb radarbasierter Füllstandmessgeräte bzw. für den Betrieb von Sensoren, welche elektromagnetische Strahlung aussenden.

Das Radarmodul kann eine Radarschaltung, eine Hochfrequenzschaltung und/oder eine Hochfrequenzanordnung bezeichnen. Insbesondere kann das Radarmodul eine Hochfrequenzeinheit zur Erzeugung des Sendesignals und/oder zur Verarbeitung des Empfangssignals aufweisen. Die Hochfrequenzeinheit und/oder das Radarmodul kann etwa einen oder mehrere Verstärker, einen oder mehrere Frequenzmischer, einen oder mehrere Oszillatoren, etwa spannungsgesteuerte Oszillatoren und/oder Push-Push-Oszillatoren, und/oder einen oder mehrerer Filter, etwa Hochpassfilter und/oder Tiefpassfilter aufweisen. Insbesondere kann die Hochfrequenzeinheit und/oder das Radarmodul dazu ausgestaltet sein, das Empfangssignal unter Mischung mit dem Sendesignal in ein Zwischenfrequenzsignal zu überführen.

Zum eigentlichen Abstrahlen des Sendesignals und/oder zum Empfangen des Empfangssignals, welches den an dem Medium reflektierten Teil des Sendesignals bezeichnen kann, kann das Radarmodul ferner wenigsten eine Antenne aufweisen. Beispielsweise kann das Radarmodul wenigstens eine Parabolantenne, eine Hornantenne, eine Cassegrain-Antenne und/oder eine Patchantenne aufweisen. Das Radarmodul kann auch eine Antennenanordnung aufweisen. Beispielsweise kann das Füllstandmessgerät dazu eingerichtet sein, eine Richtcharakteristik der Antennenanordnung anzupassen, etwa basierend auf Strahlformungsverfahren, beispielsweise um eine Bündelung des Sendesignals zu erzielen.

Die Steuereinheit kann beispielsweise eine Steuerschaltung, eine Auswerteeinheit und/oder eine Auswerteschaltung bezeichnen, welche beispielsweise einen oder mehrere Logik-Bausteine und/oder Prozessoren aufweisen kann. Die Steuereinheit kann ferner einen oder mehrere Analog-Digital-Wandler aufweisen, beispielsweise um das Empfangssignal und/oder ein basierend darauf generiertes Zwischenfrequenzsignal in ein digitales Signal zu überführen. Im Kontext der vorliegenden Offenbarung kann das Messsignal ein solches digitales Signal sein.

Die Aktivierungseinheit der Steuereinheit kann eine Aktivierungsschaltung und/oder ein Aktivierungsmodul bezeichnen. Die Aktivierungseinheit kann etwa zur Verarbeitung des Bewegungssignals und/oder des Positionssignals mit der Detektionseinheit gekoppelt sein. Allgemein kann die Aktivierungseinheit einen Teil und/oder eine Komponente der Steuereinheit bezeichnen. Alternativ oder zusätzlich kann die Aktivierungseinheit in der Steuereinheit integriert sein.

Die Aktivierungseinheit kann allgemein dazu eingerichtet sein, das Radarmodul basierend auf dem Bewegungssignal und/oder dem Positionssignal zu betätigen. Gleichsam kann im Kontext der vorliegenden Offenbarung das "Aktivieren und/oder Deaktivieren des Radarmoduls" ein "Betätigen des Radarmoduls" bedeuten.

Ein Aktivieren des Radarmoduls kann hierbei bedeuten, dass eine Füllstandmessung durchgeführt und/oder freigegeben werden kann. Beispielsweise kann die Steuereinheit und/oder die Aktivierungseinheit dazu eingerichtet sein, beim Aktivieren des Radarmoduls eine Versorgung zumindest eines Teils des Radarmoduls, beispielsweise der Hochfrequenzeinheit und/oder der Antenne, mit elektrischer Energie zu aktivieren und/oder zu erhöhen. Beispielsweise kann hierbei der Strom und/oder die Spannung von einem ersten Wert auf einen zweiten Wert erhöht werden. Der erste Wert kann dabei Null sein (etwa Null Ampere und/oder Null Volt) oder einen von Null verschieden Wert aufweisen. Gleichsam kann das Aktivieren wenigstens eines Teils des Radarmoduls ein Anschalten und/oder ein Eischalten bedeuten. Alternativ oder zusätzlich kann das Aktivieren des Radarmoduls bedeuten, dass eine Messung des Füllstandes und/oder ein Aussenden des Sendesignals ermöglicht und/oder freigegeben wird.

Das Deaktivieren des Radarmoduls kann bedeuten, dass keine Füllstandmessung durchgeführt werden kann. Beispielsweise kann die Steuereinheit und/oder die Aktivierungseinheit dazu eingerichtet sein, bei Deaktivieren des Radarmoduls eine Versorgung zumindest eines Teils des Radarmoduls, beispielsweise der Hochfrequenzeinheit und/oder der Antenne, mit elektrischer Energie zu deaktivieren und/oder zu verringern. Beispielsweise kann hierbei der Strom und/oder die Spannung von einem zweiten Wert auf einen ersten Wert verringert werden. Der erste Wert kann dabei Null sein (etwa Null Ampere und/oder Null Volt) oder einen von Null verschieden Wert aufweisen. Gleichsam kann das Deaktivieren wenigstens eines Teils des Radarmoduls ein Abschalten bedeuten, so dass eine Messung des Füllstandes und/oder ein Aussenden des Sendesignals unterbunden ist. Alternativ oder zusätzlich kann das Deaktivieren des Radarmoduls bedeuten, dass eine Messung des Füllstandes und/oder ein Aussenden des Sendesignals unterdrückt und/oder unterbunden wird.

Die Detektionseinheit kann im Kontext der vorliegenden Offenbarung eine Detektionsschaltung, eine Detektionsanordnung, eine Sensorschaltung, eine Sensoranordnung, eine Bewegungserkennungseinheit, eine Positionsbestimmungseinheit und/oder eine Bewegungserkennungs- und Positionsbestimmungseinheit bezeichnen. Zur Ermittlung des Bewegungssignals und/oder des Positionssignals kann die Detektionseinheit wenigstens einen Sensor aufweisen, wobei der wenigstens eine Sensor beispielsweise ein akustischer, optischer und/oder auf Radar basierender Dopplersensor, ein Beschleunigungssensor, ein Gyrosensor, ein Vibrationssensor, ein Erdmagnetfeldsensor und/oder ein Positionssensor sein kann.

Die Detektionseinheit kann beispielsweise dazu eingerichtet sein, zu ermitteln, zu detektieren und/oder zu erkennen, ob das Füllstandmessgerät an einem Ort stationär verharrt, oder ob es sich in Bewegung befindet. Die Detektionseinheit kann hierzu über einen oder mehrere Sensoren verfügen, welche unmittelbar eine Bewegung des Füllstandmessgerätes anzeigen, wie beispielsweise einen akustischen, optischen und/oder auf Radar basierenden Dopplersensor, einen Beschleunigungssensor, einen Vibrationssensor und/oder einen Erdmagnetfeldsensor. Alternativ oder zusätzlich kann die Detektionseinheit hierzu über wenigstens einen Sensor und/oder Positionssensor verfügen und/oder dazu eingerichtet sein, durch Bestimmung, etwa kontinuierliche Bestimmung, einer aktuellen Position des Füllstandmessgeräts und unter Differenzbildung zu wenigstens einer zeitlich vorangehend ermittelten Position des Füllstandmessgeräts eine Bewegung des Füllstandmessgeräts zu detektieren. Hierzu kann die Detektionseinheit beispielsweise dazu eingerichtet sein, unter Auswertung von Navigationssignalen und/oder Signalen von Satelliten, etwa GPS, GLONASS, GALILEO, und/oder unter Auswertung von Positionsdaten welche von einem Drahtlosnetzwerk (etwa Mobilfunk, LAN, LoRa, Sigfox, NB-IOT) zur Verfügung gestellt werden (beispielsweise über eine Kommunikationseinheit des Füllstandmessgeräts), zu ermitteln, ob das Füllstandmessgerät an einem stationären Ort verharrt oder ob es bewegt wird. Mit anderen Worten kann vorgesehen sein, dass die Detektionseinheit Informationen einer Kommunikationseinheit des Füllstandmessgeräts nutzt, insbesondere Positionsdaten, welche über und/oder von einem Drahtlosnetzwerk an das Füllstandmessgerät übermittelt werden können.

Das Bewegungssignal kann allgemein ein Signal bezeichnen, welches eine Bewegung des Füllstandmessgeräts anzeigt, repräsentiert und/oder beschreibt. Beispielsweise kann das Bewegungssignal ein binäres Signal sein, wobei ein erster Wert (bzw. Bewegungswert) des Bewegungssignals anzeigen kann, dass das Füllstandmessgerät an einem stationären Ort verharrt (bzw. in einem Stillstand ist) und ein weiterer Bewegungswert des Bewegungssignals kann anzeigen, dass sich das Füllstandmessgerät in Bewegung befindet. Das Bewegungssignal kann jedoch auch nicht in binärer Form vorliegen. Beispielsweise kann das Bewegungssignal auch indikativ, beschreibend, repräsentativ und/oder anzeigend für eine Bewegungswert des Füllstandmessgeräts sein, wobei der Bewegungswert und/oder das Bewegungssignal mit einer Bewegung des Füllstandmessgeräts, mit einer Geschwindigkeit, mit welcher das Füllstandmessgerät bewegt wird, und/oder mit einer Distanz, über welche das Füllstandmessgerät bewegt wird, korrelieren kann.

Das Positionssignal kann allgemein ein Signal bezeichnen, welches Informationen bezüglich einer geographischen Position des Füllstandmessgeräts enthält. Auch kann die geographische Position des Füllstandmessgeräts von dem Positionssignal ableitbar sein. Gleichsam kann das Positionssignal eine geographische Position des Füllstandmessgeräts anzeigen, repräsentieren, beschreiben und/oder kodieren. Beispielsweise kann das Positionssignal Positionsdaten bezüglich der geographischen Position des Füllstandmessgeräts enthalten. Auch ist anzumerken, dass das Bewegungssignal das Positionssignal umfassen kann und umgekehrt.

Das von der Detektionseinheit ermittelte Bewegungssignal und/oder das Positionssignal kann von der Detektionseinheit an die Steuereinheit und/oder die Aktivierungseinheit übermittelt werden. Innerhalb der Steuereinheit kann die Aktivierungseinheit das Bewegungssignal und/oder das Positionssignal analysieren und/oder verarbeiten. Die Aktivierungseinheit und/oder die Steuereinheit kann ferner dazu eingerichtet sein, bei Vorhandensein einer Bewegung des Füllstandmessgeräts sicherzustellen, dass während der Bewegung des Füllstandmessgeräts das Radarmodul, die Hochfrequenzeinheit und/oder die Antenne deaktiviert ist, und somit kein Abstrahlen des Sendesignals erfolgen kann. Auch kann die Steuereinheit und/oder die Aktivierungseinheit dazu eingerichtet sein, eine Messung des Füllstandes und/oder ein Aussenden des Sendesignals durch Aktivieren des Radarmoduls, etwa der Hochfrequenzeinheit und/oder der Antenne, freizugeben. Auf diese Art kann sichergestellt werden, dass das Füllstandmessgerät insbesondere auch auf beweglichen Behältern die Vorgaben gesetzlicher Vorschriften und/oder Normen unter allen erdenklichen Umständen sicher einhalten kann.

Gemäß einer Ausführungsform ist die Aktivierungseinheit der Steuereinheit dazu eingerichtet, das Radarmodul basierend auf dem Bewegungssignal und/oder Positionssignal derart zu betätigen, insbesondere zu aktivieren und/oder zu deaktivieren, dass das Radarmodul ausschließlich während eines Stillstandes des Füllstandmessgeräts das Sendesignal sendet. Der Stillstand des Füllstandmessgeräts kann bedeuten, dass das Füllstandmessgerät nicht in Bewegung ist, sich nicht in Bewegung befindet, nicht bewegt wird und/oder an einem stationären Ort (bzw. einer stationären Position) befindet und/oder angeordnet ist. Auf diese Weise kann sichergestellt werden, dass keine Messung während einer Bewegung des Füllstandmessgeräts erfolgen kann.

Gemäß einer Ausführungsform ist die Aktivierungseinheit dazu eingerichtet, basierend auf dem Bewegungssignal und/oder dem Positionssignal zu ermitteln, ob sich das Füllstandmessgerät im Umkreis, in einer Zone, in einem Gebiet und/oder in einer Umgebung einer geschützten Einrichtung, insbesondere im Umkreis einer Radioastronomiestation, befindet, wobei die Aktivierungseinheit dazu eingerichtet ist, das Radarmodul zumindest teilweise zu deaktivieren, wenn sich das Füllstandmessgerät im Umkreis, in einer Zone, in einem Gebiet und/oder in einer Umgebung der geschützten Einrichtung befindet. Der Umkreis um die geschützte Einrichtung kann dabei ein beliebiges geographisches Gebiet bezeichnen, innerhalb dessen sich die geschützte Einrichtung befindet. Der Umkreis kann etwa über geographische Koordinaten und/oder Positionsdaten der geschützten Einrichtung definiert sein. Es wird darauf hingewiesen, dass der Umkreis im Kontext der vorliegenden Offenbarung nicht etwa auf einen kreisförmigen Umkreis beschränkt ist, sondern eine Umgebung mit beliebiger Geometrie bezeichnen kann.

In Abhängigkeit vom Land, in welchem das Füllstandmessgerät betrieben wird, kann eine Umgebung durch die jeweiligen landesrechtlichen Zulassungsvorgaben definiert sein. Das Füllstandmessgerät kann eingerichtet sein, das Land, in welchem es betrieben wird, automatisiert zu bestimmen, beispielsweise unter Verwendung der der Detektionseinheit, eines Positionssensors, einer Positionsermittlungseinheit und/oder im Speicher hinterlegten Länderinformationen. Das Füllstandmessgerät kann darüber hinaus eingerichtet sein, abhängig vom Betriebsland die landesrechtlich anzuwendenden, gültigen Definitionen für die Definition einer Umgebung der geschützten Einrichtung zu bestimmen und/oder zu verwenden. Solche Definitionen können beispielsweise in einem Speicher und/oder einem nichtflüchtigen Speicherbereich des Füllstandmessgerätes abgelegt sein.

Die Erfindung kann insbesondere als auf den nachfolgend beschriebenen Erkenntnissen beruhend angesehen werden. Es kann vorgesehen sein, den Füllstand eines Mediums in einem ortsveränderlichen und/oder transportablen Behälter, d.h. in einem Behälter, welcher bewegt werden kann, zu ermitteln. Bei solchen Behältern kann es sich beispielsweise um sogenannte Intermediate Bulk Container oder beliebige andere bewegliche Behälter, wie etwa einen Behälter (etwa einen Container) auf einem Zug, einen Behälter (etwa einen Container) auf einem Schiff, einen Behälter (etwa einen Container) auf einem Transportfahrzeug handeln. Das Füllstandmessgerät kann dabei, etwa außenseitig oder innenseitig, an dem Behälter angebracht, befestigt und/oder montiert sein. Eine Bewegung solcher Behälter kann in regelmäßigen Abständen stattfinden, etwa um ein Füllgut und/oder das Medium von einem Lieferanten zu einem Kunden zu transportieren. Bei konventionellen Füllstandmessgeräten kann nicht sichergestellt werden, dass diese keine Messung durchführen, während der mobile Behälter (und damit das Füllstandmessgerät selbst) transportiert wird. Dies kann insbesondere bei hermetisch abgeschlossenen Füllstandmessgeräten der Fall sein, welche mit Batterie betrieben werden. Auch das Durchfahren der Umgebung einer geschützten Einrichtung, wie z.B. einer Radioastronomiestation, kann mit konventionellen Füllstandmessgeräten nicht vorhergesehen und/oder erkannt werden. Ein regelkonformer Betrieb solcher konventioneller Füllstandmessgeräte, insbesondere auf mobilen Behältern, ist daher nicht möglich.

Im Gegensatz zu konventionellen Füllstandmessgerät kann das erfindungsgemäße Füllstandmessgerät dazu eingerichtet sein, zu erkennen, ob das Füllstandmessgerät bewegt wird und/oder ob es sich im Umkreis um eine geschützte Einrichtung befindet. Wenn dies der Fall ist, so deaktiviert die Steuereinheit und/oder die Aktivierungseinheit zumindest einen Teil des Radarmoduls, so dass kein Sendesignal abgestrahlt wird, während das Füllstandmessgerät bewegt wird und/oder während sich das Füllstandmessgerät im Umkreis der geschützten Einrichtung befindet. Zur Deaktivierung des Radarmoduls ist ferner kein Personal notwendig, sodass das erfindungsgemäße Füllstandmessgerät zuverlässig, sicher, autonom und autark unter Einhaltung sämtlicher gesetzlicher Vorschriften und/oder Normen betrieben werden kann. Hierdurch kann auch eine Zulassung des Füllstandmessgeräts bei staatlichen Behörden wesentlich vereinfacht werden.

Das Füllstandmessgerät und/oder das Radarmodul kann beispielsweise dazu eingerichtet sein, ein Sendesignal mit einer Sendefrequenz von wenigstens 6 GHz abzustrahlen. Die Sendefrequenz des Sendesignals kann beispielsweise in den Frequenzbereichen zwischen 6 GHz und 24 GHz, zwischen 57 GHz und 64 GHz und/oder zwischen 75 GHz und 85 GHz liegen. Alternativ oder zusätzlich kann das Radarmodul als V-Band-Radarmodul, als E-Band-Radarmodul, als W-Band-Radarmodul und/oder als F-Band-Radarmodul ausgeführt sein. Mit anderen Worten kann die Sendefrequenz des Sendesignals zwischen 60 GHz und 75 GHz (V-Band), zwischen 60 GHz und 90 GHz (E-Band), zwischen 75 GHz und 110 GHz (W-Band) und/oder zwischen 90 GHz und 140 GHz (F-Band) liegen.

Durch Vorsehen der Detektionseinheit zur Ermittlung des Bewegungssignals und/oder des Positionssignals sowie durch Vorsehen der Aktivierungseinheit kann sichergestellt werden, dass das Füllstandmessgerät hochfrequente Radarsignale, etwa das Sendesignal mit einer Frequenz von z.B. 6 GHz oder höher, nur genau dann abstrahlt, wenn das Füllstandmessgerät an einem festen Ort verharrt. Darüber hinaus kann sichergestellt werden, dass das Füllstandmessgerät keine hochfrequenten Radarsignale mit einer Frequenz von z.B. 6 GHz oder höher abstrahlt, wenn es sich im Umkreis um eine geschützte Einrichtung, wie z.B. einer Radioastronomiestation, befindet.

Gemäß einer Ausführungsform repräsentiert das Positionssignal eine aktuelle geographische Position des Füllstandmessgeräts und/oder das Positionssignal korreliert mit einer aktuellen Position des Füllstandmessgeräts, wobei die Aktivierungseinheit dazu eingerichtet ist, basierend auf einem Vergleich der aktuellen Position des Füllstandmessgeräts mit Positionsdaten, welche den Umkreis der geschützten Einrichtung angeben und/oder definieren, zu ermitteln, ob sich das Füllstandmessgerät im Umkreis der geschützten Einrichtung befindet. Stellt die Aktivierungseinheit basierend auf dem Vergleich fest, dass sich das Füllstandmessgerät in dem Umkreis befindet, so kann das Radarmodul zumindest teilweise deaktiviert werden.

Gemäß einer Ausführungsform sind die Positionsdaten, welche den Umkreis der geschützten Einrichtung definieren, in einem Speicher, einer Speichereinrichtung und/oder in einem Datenspeicher des Füllstandmessgeräts hinterlegt. Alternativ oder zusätzlich ist das Füllstandmessgerät dazu eingerichtet, die Positionsdaten, welche den Umkreis der geschützten Einrichtung definieren, über eine Fernabfrage, beispielsweise über eine Kommunikationseinheit des Füllstandmessgeräts, abzurufen. Dadurch kann sichergestellt werden, dass das Füllstandmessgerät in den Umkreisen beliebiger Einrichtungen deaktiviert werden kann. Auch können die Positionsdaten der geschützten Einrichtungen auf einfache Weise aktualisiert und/oder angepasst werden.

In dem Speicher des Füllstandmessgeräts können ferner Softwareinstruktionen hinterlegt sein, welche bei deren Ausführung, etwa durch einen Prozessor des Füllstandmessgeräts, das Füllstandmessgerät, die Detektionseinheit, die Aktivierungseinheit und/oder die Steuereinheit dazu veranlassen, eine oder mehrere Funktionen des erfindungsgemäßen Füllstandmessgeräts durchzuführen und/oder auszuführen.

Gemäß einer Ausführungsform weist die Detektionseinheit wenigstens einen Sensor zur Ermittlung des Bewegungssignals und/oder des Positionssignals auf, wobei der wenigstens eine Sensor ausgewählt ist aus der Gruppe bestehend aus Dopplersensor, Beschleunigungssensor, Gyrosensor, Vibrationssensor, Erdmagnetfeldsensor und Positionssensor. Auch beliebige andere Sensoren, wie beispielsweise optische Sensoren und/oder eine Kamera können zur Ermittlung des Bewegungssignals und/oder des Positionssignals verwendet werden.

Gemäß einer Ausführungsform ist die Detektionseinheit dazu eingerichtet, ein erstes Positionssignal zu einem ersten Zeitpunkt und ein zweites Positionssignal zu einem zweiten Zeitpunkt zu ermitteln, welcher sich von dem ersten Zeitpunkt unterscheidet, wobei die Detektionseinheit dazu eingerichtet ist, das Bewegungssignal basierend auf einem Vergleich des ersten Positionssignals und des zweiten Positionssignals zu ermitteln. Das erste Positionssignal kann etwa eine erste Position des Füllstandmessgeräts repräsentieren und/oder beinhalten und das zweite Positionssignal kann eine zweite Position des Füllstandmessgeräts repräsentieren und/oder beinhalten. Unterscheidet sich die erste Position von der zweiten Position, so kann die Detektionseinheit basierend auf dem Vergleich zuverlässig ermitteln, ob sich das Füllstandmessgerät bewegt oder stillsteht. Der Vergleich des ersten und zweiten Positionssignals kann beispielsweise eine Differenzbildung der ersten Position und der zweiten Position beinhalten. Auch können mehr als zwei Positionssignale zur Ermittlung des Bewegungssignals herangezogen werden.

Gemäß einer Ausführungsform, weist das Füllstandmessgerät ferner eine Kommunikationseinheit auf, welche dazu eingerichtet ist, das Messsignal und/oder einen mit dem Messsignal korrelierenden Messwert drahtlos und/oder über ein Drahtlosnetzwerk an einen Empfänger zu übermitteln. Das Drahtlosnetzwerk kann beispielsweise ein Mobilfunknetz, das Internet, ein LAN-Netz, ein WLAN-Netz, ein LoRa-Netz, ein Sigfox-Netz und/oder ein NB-IoT-Netz sein. Hierzu kann das Füllstandmessgerät und/oder die Kommunikationseinheit wenigstens ein WLAN-Modul, ein Bluetooth-Modul, ein Funkmodul, ein Mobilfunkmodul und/oder ein Infrarot-Modul aufweisen.

Gemäß einer Ausführungsform ist die Detektionseinheit mit der Kommunikationseinheit gekoppelt, wobei die Detektionseinheit dazu eingerichtet ist, das Bewegungssignal und/oder das Positionssignal basierend auf über die Kommunikationseinheit empfangenen Positionsdaten, welche beispielsweise die Position des Füllstandmessgeräts anzeigen, zu ermitteln. Derartige Positionsdaten können dem Füllstandmessgerät beispielsweise über ein Drahtlosnetzwerk bereitgestellt sein, mit welchem die Kommunikationseinheit und/oder das Füllstandmessgerät verbunden ist.

Gemäß einer Ausführungsform ist die Detektionseinheit zumindest teilweise in der Steuereinheit integriert. Mit anderen Worten kann die Detektionseinheit Teil der Steuereinheit sein. Dies kann ermöglichen, das Füllstandmessgerät kompakt und platzsparend auszugestalten.

Gemäß einer Ausführungsform weist das Radarmodul eine Hochfrequenzeinheit zur Erzeugung des Sendesignals sowie eine Antenne zum Abstrahlen des Sendesignals und zum Empfangen des Empfangssignals auf, wobei die Aktivierungseinheit dazu eingerichtet ist, die Hochfrequenzeinheit und/oder die Antenne in Abhängigkeit des von der Detektionseinheit ermittelten Bewegungssignals und/oder Positionssignals zu betätigen, zu aktivieren und/oder zu deaktivieren.

Gemäß einer Ausführungsform weist das Füllstandmessgerät ferner ein Gehäuse auf, welches das Radarmodul, die Steuereinheit und die Detektionseinheit vollständig und/oder permanent umschließt. Alternativ oder zusätzlich ist das Füllstandmessgerät nach außen vollständig kabellos ausgeführt. Mit anderen Worten kann das Gehäuse keine Kabeldurchführungen aufweisen. Insbesondere kann das Gehäuse auch weitere Komponenten des Füllstandmessgeräts, wie etwa die Kommunikationseinheit, die Antenne, die Hochfrequenzeinheit und/oder eine Energieversorgungseinheit vollständig umschließen. Das Gehäuse kann insbesondere derart ausgestaltet sein, dass es nicht geöffnet werden kann. Dadurch wird beispielsweise vermieden, dass durch ein ungewolltes Öffnen des Gehäuses aggressive Gase oder Flüssigkeiten mit Komponenten des Füllstandmessgeräts in Kontakt treten können. Das permanent die Sensoreinheit und Auswerteeinheit umhüllende Gehäuse kann somit die Sicherheit und Robustheit des Radarsensors erhöhen. Das Gehäuse kann ferner das Radarmodul, die Steuereinheit, die Detektionseinheit und/oder weitere Komponenten hermetisch, luftdicht, staubdicht, und/oder wasserdicht umschließen.

Das Füllstandmessgerät und/oder das Radarmodul kann etwa dazu eingerichtet sein, das Sendesignal durch das Gehäuse und/oder durch eine Wandung des Gehäuses hindurch abzustrahlen. Alternativ oder zusätzlich kann das Füllstandmessgerät und/oder das Radarmodul dazu eingerichtet sein, das Empfangssignal durch das Gehäuse und/oder durch eine Wandung des Gehäuses hindurch zu empfangen.

Ferner kann das Füllstandmessgerät und/oder die Kommunikationseinheit dazu eingerichtet sein, das Messsignal und/oder einen mit dem Messsignal korrelierenden Messwert drahtlos durch das Gehäuse an einen Empfänger zu senden. Auch kann das Füllstandmessgerät durch das Gehäuse hindurch weitere Daten, etwa Parametrierdaten und/oder eine Firmware, empfangen und/oder senden.

Des Weiteren kann das Füllstandmessgerät dazu ausgestaltet sein, außenseitig und/oder innenseitig an einem Behälter befestigt zu werden. Hierzu kann etwa eine Klebefläche außenseitig an dem Gehäuse des Füllstandmessgeräts vorgesehen sein, mit welcher das Füllstandmessgerät zuverlässig, kostengünstig und auf einfache Weise an dem Behälter montiert und/oder befestigt werden kann.

Gemäß einer Ausführungsform weist das Füllstandmessgerät ferner eine Energieversorgungseinheit auf, welche in einem Gehäuse des Füllstandmessgeräts angeordnet ist und welche dazu eingerichtet ist, das Radarmodul, die Steuereinheit und die Detektionseinheit mit elektrischer Energie zu versorgen. Die Energieversorgungseinheit kann auch weitere Komponenten, wie beispielsweise die Kommunikationseinheit, mit elektrischer Energie versorgen. Die Energieversorgungseinheit kann dazu wenigstens eine Batterie aufweisen, wobei die Batterie auswechselbar oder nicht auswechselbar sein kann. Dies kann ermöglichen, ein autonomes Füllstandmessgerät bereitzustellen.

Gemäß einer weiteren Ausführungsform weist die Energieversorgungseinheit einen Akkumulator auf. Ferner kann die Energieversorgungseinheit eine Ladeeinheit zum Aufladen des Akkumulators aufweisen. Durch das Wiederaufladen des Akkumulators durch die Ladeeinheit kann die Betriebsdauer des Radarsensors verlängert werden.

Die Energieversorgungseinheit kann auch eine Vorrichtung zur Ermittlung des Ladezustands des Akkumulators und/oder der Batterie aufweisen. Das Füllstandmessgerät kann dazu eingerichtet sein, die Messung des Füllstandes und/oder eines Grenzstandes in dem Behälter nach bestimmten Zeitabständen zu wiederholen und/oder durchzuführen, wobei der Zeitabstand von dem Ladezustand des Akkumulators und/oder der Batterie abhängen kann. Beispielweise können bei geringem Ladezustand innerhalb einer gewissen Zeitperiode weniger häufig Messungen durchgeführt werden als bei hohem Ladezustand.

Gemäß einer Ausführungsform weist das Füllstandmessgerät einen Schalter auf, welcher von einem Benutzer und/oder Anwender betätigt werden kann, beispielsweise manuell, um das Radarmodul, die Antenne, die Hochfrequenzeinheit und/oder das Füllstandmessgerät zu deaktivieren, insbesondere vor Beginn eines Transportes und/oder vor Eintritt (bzw. Einfahrt) des Füllstandmessgeräts in den Umkreis einer geschützten Einrichtung. Über den Schalter kann zudem das Radarmodul, die Antenne, die Hochfrequenzeinheit und/oder das Füllstandmessgerät aktiviert werden, etwa durch erneute Betätigung des Schalters, wenn der Transport des Füllstandmessgeräts abgeschlossen ist und/oder wenn sich das Füllstandmessgerät außerhalb des Umkreises der geschützten Einrichtung befindet, etwa nach Austritt des Füllstandmessgeräts aus dem Umkreis der geschützten Einrichtung.

Ein weiterer Aspekt betrifft die Verwendung eines Füllstandmessgeräts, so wie voranstehend und nachfolgend beschrieben, als Grenzstandschalter zur Ermittlung eines Grenzstandes des Mediums.

Ein weiterer Aspekt betrifft ein Verfahren zum Betreiben eines Füllstandmessgeräts, so wie voranstehend und nachfolgend beschrieben. Das Verfahren weist die folgenden Schritte auf:
- Ermitteln, mit einer Detektionseinheit des Füllstandmessgeräts, eines eine Bewegung des Füllstandmessgeräts indizierenden Bewegungssignals und/oder eines eine geographische Position des Füllstandmessgeräts indizierenden Positionssignals; und
- Aktivieren und/oder Deaktivieren, mit einer Steuereinheit des Füllstandmessgeräts, zumindest eines Teils eines Radarmoduls des Füllstandmessgeräts in Abhängigkeit des ermittelten Bewegungssignals und/oder in Abhängigkeit des ermittelten Positionssignals.

Merkmale, Elemente und/oder Funktionen des Radarsensors, so wie voranstehend und nachfolgend beschreiben, können Merkmale, Elemente und/oder Schritte des Verfahrens zum Betreiben des Füllstandmessgeräts, so wie voranstehend und nachfolgend beschrieben, sein und umgekehrt.

Gemäß einem weiteren Aspekt ist ein Programmelement angegeben, das, wenn es auf einem Prozessor des Füllstandmessgeräts und/oder der Steuereinheit ausgeführt wird, das Füllstandmessgerät anleitet, Schritte des Verfahrens, so wie voranstehend und nachfolgend beschrieben, auszuführen.

Gemäß einem weiteren Aspekt ist ein computerlesbares Medium angegeben, auf dem ein Programmelement gespeichert ist, das, wenn es auf einem Prozessor des Füllstandmessgeräts und/oder der Steuereinheit ausgeführt wird, das Füllstandmessgerät anleitet, Schritte des Verfahrens, so wie voranstehend und nachfolgend beschrieben, auszuführen.

Im Folgenden werden Ausführungsbeispiele der Erfindung unter Bezugnahme auf die Figuren beschrieben.

### Kurze Beschreibung der Figuren

Fig. 1 illustriert schematisch ein Anwendungsbeispiel eines Füllstandmessgeräts gemäß einem Ausführungsbeispiel.
Fig. 2 zeigt schematisch ein Füllstandmessgerät gemäß einem Ausführungsbeispiel.
Fig. 3 zeigt schematisch ein Füllstandmessgerät gemäß einem Ausführungsbeispiel.
Fig. 4 zeigt schematisch ein Füllstandmessgerät gemäß einem Ausführungsbeispiel.
Fig. 5 zeigt ein Flussdiagramm zur Illustration von Schritten eines Verfahrens zum Betreiben eines Füllstandmessgeräts gemäß einem Ausführungsbeispiel.
Fig. 6 zeigt ein Flussdiagramm zur Illustration von Schritten eines Verfahrens zum Betreiben eines Füllstandmessgeräts gemäß einem Ausführungsbeispiel.

Ähnliche, ähnlich wirkende, gleiche oder gleich wirkende Elemente in den Figuren werden mit ähnlichen oder gleichen Bezugszeichen versehen. Die Figuren sind lediglich schematische und nicht maßstabsgetreu.

### Detaillierte Beschreibung von Ausführungsbeispielen

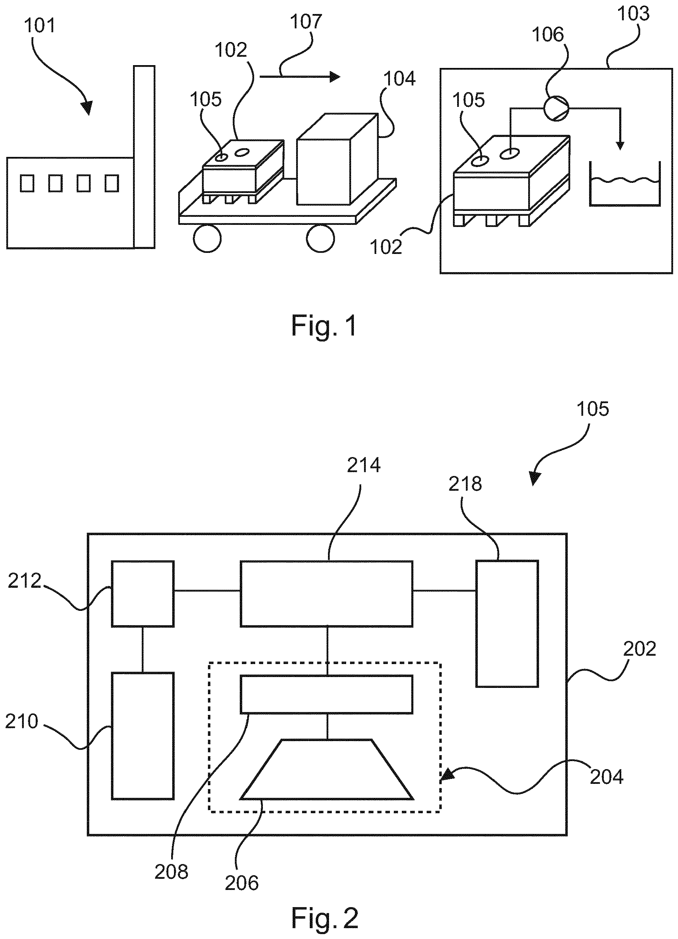

Figur 1 illustriert schematisch ein Anwendungsbeispiel eines Füllstandmessgeräts 105 gemäß einem Ausführungsbeispiel.

Im Rahmen einer üblichen Kunden-Lieferantenbeziehung kann ein erster Industriebetrieb 101 ein Produkt und/oder Medium herstellen, welches mit Hilfe eines transportierbaren Behälters 102 zu einem Kunden 103 befördert wird. Der Transport des Mediums kann in unterschiedlichen Behältnissen erfolgen, beispielsweise Tanks, Fässern, Containern, Kippern und/oder Mulden. Aufgrund der effizienten Nutzung des Transportvolumens auf LKWs 104, Schiffen und/oder Eisenbahnwaggons werden häufig Intermediate Bulk Container für flüssige und/oder rieselfähige Medien verwendet.

Ein speziell für den mobilen Einsatz konzipiertes Füllstandmessgerät 105 kann dabei fest mit dem transportierbaren Behälter 102 verbunden sein, und kann sowohl beim Lieferanten 101 als auch beim Kunden 103 dazu genutzt werden, den Füllstand des Mediums innerhalb des Behälters 102 zu ermitteln.

Der Lieferant 101 kann zunächst den Behälter 102 mit dem Medium befüllen. Nachdem der Behälter 102 vom Transportfahrzeug 104 dem Kunden 103 ausgeliefert wurde, entleert der Kunde 103 den Behälter 102, beispielsweise mit Hilfe einer Pumpe 106. Nach Entleeren des Behälters 102 wird dieser üblicherweise wieder zurück zum Lieferanten 101 transportiert, woraufhin ein neues Befüllen des Behälters 102 möglich wird.

Das auf dem mobilen Behälter 102 verwendete Füllstandmessgerät 105 kann prinzipiell über eine normierte Schnittstelle sowohl beim Lieferanten 101 als auch beim Kunden 103 drahtgebunden mit einer übergeordneten Energieversorgungs- und Steuerungseinrichtung verbunden werden. Alternativ kann das Füllstandmessgerät 105 jedoch auch autonom betrieben werden, etwa über eine Energieversorgungseinheit mit einer Batterie, wie voranstehend und nachfolgend näher erläutert.

Es sei an dieser Stelle betont, dass das Anwendungsbeispiel der Figur 1 mit dem mobilen Behälter 102 lediglich exemplarisch ist. Alternativ kann das Füllstandmessgerät 105 auch an einem ortsfesten Behälter montiert sein. Insbesondere kann das Füllstandmessgerät 105 der Figur 1 wie eines der in nachfolgenden Figuren beschriebenen Füllstandmessgeräte 105 ausgestaltet sein. Figur 2 zeigt schematisch ein Füllstandmessgerät 105 gemäß einem Ausführungsbeispiel.

Zum Schutz vor Umgebungseinflüssen ist das gesamte Füllstandmessgerät 105 vorzugsweise von einer hermetischen Umhüllung 202 und/oder einem Gehäuse 202 umschlossen.

Das Füllstandmessgerät 105 weist ferner ein Radarmodul 204 mit einer Antenne 206 und einer Hochfrequenzeinheit 208 auf. Das Radarmodul 204 ist dabei innerhalb des Gehäuses 202 angeordnet und/oder aufgenommen.

Ferner weist das Füllstandmessgerät 105 eine Energieversorgungseinheit 210 und eine Netzteileinheit 212 auf, welche ebenso in dem Gehäuse 202 angeordnet sind.

Des Weiteren verfügt das Füllstandmessgerät über eine Steuereinheit 214 sowie eine Kommunikationseinheit 218, welche ebenso innerhalb des Gehäuses 202 angeordnet sind.

Die Energieversorgungseinheit 210 kann beispielsweise eine Batterie 210 aufweisen, welche der Netzteileinheit 212 fortlaufend Energie zur Verfügung stellen kann, welche wiederum die anderen Komponenten des Messgerätes 105 mit passenden Versorgungsspannungen und/oder elektrischer Energie versorgen kann.

Die Steuereinheit 214 kann beispielsweise in regelmäßigen, vorgebbaren und/oder vorab (etwa vor Inbetriebnahme) einprogrammierten zeitlichen Abständen eine Füllstandmessung durchführen. Dazu kann die Steuereinheit 214 das Radarmodul 204 und/oder die Hochfrequenzeinheit 208 ansteuern, welche daraufhin über die Antenne 206 ein Sendesignal (insbesondere ein hochfrequentes Sendesignal) über 6 GHz, in Richtung eines Mediums abstrahlt, und die Reflexionen desselben als Empfangssignal wieder empfängt. Das Empfangssignal kann von der Hochfrequenzeinheit 208 verarbeitet werden, beispielsweise im Rahmen eines Puls-Laufzeit-Verfahrens, eines Frequency Modulated Continuous Wave Verfahrens (FMCW), eines Stepped Frequency Continuous Wave Verfahrens (SFCW) oder eines anderen Verfahrens. Das Empfangssignal kann sodann in einen niederfrequenten Bereich in ein Zwischenfrequenzsignal überführt werden, und von der Steuereinheit 214 weiterverarbeitet werden. Die Steuereinheit 214 kann hierbei ein mit dem Füllstand korrelierendes Messsignal erzeugen.

Die Steuereinheit 214 ist ferner dazu eingerichtet, eine Reflexion des Mediums und/oder den Füllstand zu bestimmen, beispielsweise anhand einer Echokurve. Aus der Position dieser Reflexion lässt sich die Entfernung zum Medium und damit der Füllstand innerhalb eines Behälters 102 ermitteln.

Da das Füllstandmessgerät 105 vorzugsweise über ein hermetisch geschlossenes Gehäuse 202 verfügt, kann der ermittelte Füllstandwert und/ein Messwert vorzugsweise über die Kommunikationseinheit 218 in drahtloser Form einer übergeordneten Steuereinheit zur Verfügung gestellt werden. Innerhalb der Kommunikationseinheit 218 können unterschiedliche Standards verwendet werden, beispielsweise WLAN, Bluetooth, Zigbee, LoRa, Sigfox, NB-IoT.

Bei dem in Figur 1 dargestellten Anwendungsbeispiel kann es vorkommen, dass das Füllstandmessgerät 105 auch während einer Fahrt mit einer Geschwindigkeit 107 prinzipiell in der Lage ist, unter Abstrahlen eines oder mehrerer Sendesignale, etwa mit einer Frequenz von 6 GHz oder höher, einen oder mehrere Messwerte zu ermitteln. Das kann unter Umständen einen regelkonformen Betrieb in Europa, in den USA und/oder Kanada erschweren. Weiterhin kann aufgrund unterschiedlicher Fahrrouten des LKW's 104, Schiffes und/oder Güterwaggons nicht garantiert werden, dass beim Durchfahren einer Zone, eines Umkreises und/oder einer Umgebung um eine geschützte Einrichtung (z.B. Radioastronomiestation) keine Sendesignale vom Füllstandmessgerät 105 ausgesendet werden. Das Füllstandmessgerät 105 kann daher, wie in nachfolgend beschriebenen Figuren im Detail erläutert ist, ausgestaltet sein.

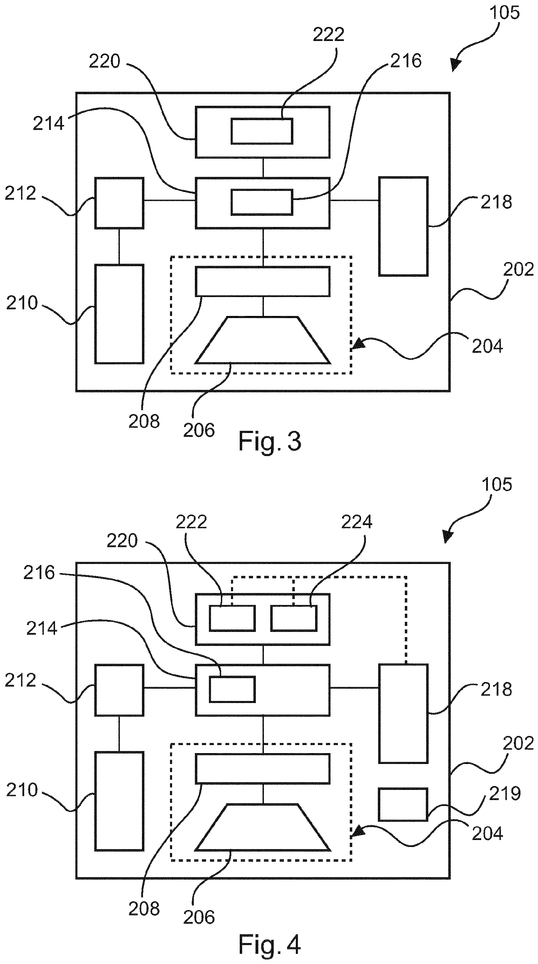

Figur 3 zeigt ein Füllstandmessgerät 105 gemäß einem Ausführungsbeispiel. Sofern nicht anders beschrieben weist das Füllstandmessgerät 105 der Figur 3 dieselben Elemente und Merkmale wie die mit Bezug auf voranstehende Figuren beschriebenen Füllstandmessgeräte 105 auf.

Das Füllstandmessgerät 105 weist zusätzlich zu den in voranstehenden Figuren beschriebenen Komponenten eine Detektionseinheit 220 auf. Die Detektionseinheit 220 kann etwa eine Bewegungserkennungseinheit 220 bezeichnen. Des Weiteren verfügt die Steuereinheit 214 über eine Aktivierungseinheit 216. Die Steuereinheit 214 der Figur 3 kann dabei eine modifizierte Steuerungs- und Auswerteeinheit 214 mit integrierter Aktivierungseinheit 216 bezeichnen.

Die Detektionseinheit 220 ist dazu eingerichtet, zu erkennen, ob das Füllstandmessgerät 105 an einem Ort stationär verharrt oder sich in Bewegung befindet. Insbesondere ist die Detektionseinheit 220 dazu eingerichtet, ein eine Bewegung des Füllstandmessgeräts 105 indizierendes, anzeigendes, repräsentierendes und/oder beschreibendes Bewegungssignal und/oder ein eine geographische Position des Füllstandmessgeräts 105 indizierendes, anzeigendes, repräsentierendes und/oder beschreibendes Positionssignal zu ermitteln.

Die Detektionseinheit 220 kann hierzu einen oder mehrere Sensoren 222 aufweisen, welche unmittelbar eine Bewegung anzeigen, ermitteln, erkennen und/oder detektieren können. Beispielsweise kann die Detektionseinheit 220 einen oder mehrere Dopplersensoren, einen oder mehrere Beschleunigungssensoren, einen oder mehrere Vibrationssensoren und/oder einen oder mehrere Erdmagnetfeldsensoren aufweisen. Basierend auf einem oder mehrerer Sensorsignalen des wenigstens einen Sensors 222 kann die Detektionseinheit 220 das Bewegungssignal und/oder das Positionssignal ermitteln. Alternativ oder zusätzlich kann die Detektionseinheit 220 zur Ermittlung des Bewegungssignals und/oder des Positionssignals einen oder mehrere Sensoren 222 aufweisen, welche beispielsweise durch kontinuierliche Bestimmung der aktuellen Position des Füllstandmessgeräts 105 und unter Differenzbildung zu einer zeitlich vorangehend ermittelten Positionen eine Bewegung des Füllstandmessgeräts 105 detektieren, beispielsweise unter Auswertung von Navigationssignalen und/oder Signalen von Satelliten (etwa GPS, GLONASS, GALILEO). Mit anderen Worten kann das Füllstandmessgerät 105 und/oder die Detektionseinheit 220 einen oder mehrere Positionssensoren 222 aufweisen und dazu eingerichtet sein, das Bewegungssignal und/oder das Positionssignal zu ermitteln. Alternativ oder zusätzlich kann die Detektionseinheit 220 das Bewegungssignal und/oder das Positionssignal unter Auswertung von Positionsdaten, welche von einem Drahtlosnetzwerk (etwa Mobilfunk, LAN, LoRa, Sigfox, NB-IoT) über die Kommunikationseinheit 218 zur Verfügung gestellt werden, ermitteln. Es kann daher vorgesehen sein, dass die Detektionseinheit 220 zur Ermittlung des Bewegungssignals und/oder des Positionssignals Informationen und/oder Daten der Kommunikationseinheit 218 benutzt, insbesondere Positionsdaten, welche von einem Drahtlosnetzwerk der Kommunikationseinheit 218 bekannt gemacht werden.

Das von der Detektionseinheit 220 ermittelte Bewegungssignal (bzw. ein Bewegungswert) und/oder das Positionssignal wird von der Detektionseinheit 220 an die Steuereinheit 214 und/oder die Aktivierungseinheit 216 übermittelt. Die Steuereinheit 214 und/oder die Aktivierungseinheit 216 kann hierzu mit der Detektionseinheit 220 gekoppelt sein. Die Aktivierungseinheit 216 ist dabei dazu eingerichtet, das Radarmodul 204 zumindest teilweise in Abhängigkeit des von der Detektionseinheit 220 ermittelten Bewegungssignals und/oder Positionssignals zu betätigen, zu aktivieren und/oder zu deaktivieren. Mit anderen Worten kann das Bewegungssignal und/oder das Positionssignal von der Steuerungseinheit 214 und/oder der Aktivierungseinheit 216 verarbeitet und/oder analysiert werden. Die Aktivierungseinheit 216 kann dabei bei Vorhandensein und/oder Feststellen einer Bewegung des Füllstandmessgeräts 105 das Radarmodul 204, die Hochfrequenzeinheit 208 und/oder die Antenne 206 deaktivieren, so dass kein Abstrahlen eines Sendesignals und/oder eines hochfrequenten Signals während einer Bewegung des Füllstandmessgeräts 105 erfolgt.

Ferner ist die Steuereinheit 214 und/oder die Aktivierungseinheit 216 dazu eingerichtet, basierend auf dem Bewegungssignal und/oder dem Positionssignal einen Stillstand des Füllstandmessgeräts 105 und/oder ein Verharren des Füllstandmessgeräts 105 an einem stationären Ort zu erkennen und das Radarmodul 204, die Antenne 206 und/oder die Hochfrequenzeinheit 208 zu aktivieren, so dass eine Füllstandmessung freigegeben ist und/oder erfolgen kann.

Auf diese Art kann sichergestellt werden, dass das Füllstandmessgerät 105 insbesondere auch auf beweglichen Behältern 102 die Vorgaben von gesetzlichen Vorschriften und/oder Normen einhalten kann.

Figur 4 zeigt ein Füllstandmessgerät 105 gemäß einem weiteren Ausführungsbeispiel. Sofern nicht anders beschrieben weist das Füllstandmessgerät 105 der Figur 4 dieselben Elemente und Merkmale wie die mit Bezug auf voranstehende Figuren beschriebenen Füllstandmessgeräte 105 auf.

Das Füllstandmessgerät 105 weist eine Detektionseinheit 220 mit einem Sensor 222, etwa einem Bewegungssensor 222, einen Dopplersensor 22, einen Positionssensor 224 und/oder eine Positionsbestimmungseinheit 224 auf. Die Aktivierungseinheit 216 der Steuereinheit 214 kann zur Verarbeitung von Signalen des Bewegungssensors 222 und des Positionssensors 224 angepasst, modifiziert und/oder eingerichtet sein.

Die Aktivierungseinheit 216 kann etwa eine bewegungssensitive und/oder positionssensitive Aktivierungseinheit 216 sein. Die Aktivierungseinheit 216 ist dazu eingerichtet, eines oder mehrere Positionssignale, Positionsdaten und/oder Positionswerte des Positionssensors 224 zu verarbeiten, zu analysieren und/oder auszuwerten.

Die Detektionseinheit 220 ist dazu eingerichtet, basierend auf dem wenigstens einen Bewegungssensor 222 das Bewegungssignal zu ermitteln, wie voranstehend bei Figur 3 erläutert. Alternativ oder zusätzlich ist die Detektionseinheit 220 dazu eingerichtet, basierend auf dem Positionssensor 224 eine geographische Position des Füllstandmessgeräts 105 und/oder das Positionssignal, welches die geographische Position repräsentieren kann, zu ermitteln, beispielsweise fortwährend, kontinuierlich und/oder zu vorgebbaren Zeitpunkten. Hierzu kann die Detektionseinheit 220 und/oder der Positionssensor 224 beispielsweise Signale und/oder Navigationssignale von Satelliten (etwa GPS, GLONASS, GALILEO) auswerten und/oder verarbeiten, um basierend darauf das Positionssignal zu ermitteln, zu generieren und/oder zu bestimmen. Alternativ oder zusätzlich kann die Detektionseinheit 220 und/oder der Positionssensor 224 unter Auswertung von Positionsdaten, welche von einem Drahtlosnetzwerk (etwa Mobilfunk, LAN, LoRa, Sigfox, NB-IoT) zur Verfügung gestellt werden, das Positionssignal und/oder die geographische Position des Füllstandmessgeräts 105 ermitteln.

Das Bewegungssignal und/oder das Positionssignal kann sodann der Steuereinheit 214 und/oder der Aktivierungseinheit 216 bereitgestellt werden. Die Aktivierungseinheit 216 ist dabei dazu eingerichtet, basierend auf dem Positionssignal (und/oder dem Bewegungssignal) zu prüfen und/oder zu ermitteln, ob die aktuelle Position des Füllstandmessgeräts 105 in einen Umkreis einer geschützten Einrichtung fällt. Hierzu können geographische Positionen und/oder Umkreisdefinitionen von einer oder mehreren geschützten Einrichtungen in einem Speicher 219 des Füllstandmessgeräts 105 und/oder einer Datenbank 219 in dem Füllstandmessgerät 105 hinterlegt sein. Alternativ oder zusätzlich kann vorgesehen sein, unter Verwendung der Kommunikationseinrichtung 218 die aktuelle Position des Füllstandmessgeräts 105, etwa im Internet, auf das Vorhandensein einer geschützten Einrichtung in der Nähe des Füllstandmessgeräts 105 zu überprüfen. Für den Fall einer Lokalisierung des Füllstandmessgeräts 105 im Umkreis einer geschützten Einrichtung (z.B. einer Radioastronomiestation) stellt die Steuereinheit 214 und/oder die Aktivierungseinheit 216 sicher, dass das Radarmodul 204, die Antenne 206 und/oder die Hochfrequenzeinheit 208 deaktiviert ist und somit kein Abstrahlen eines Sendesignals und/oder eines hochfrequenten Signals erfolgt.

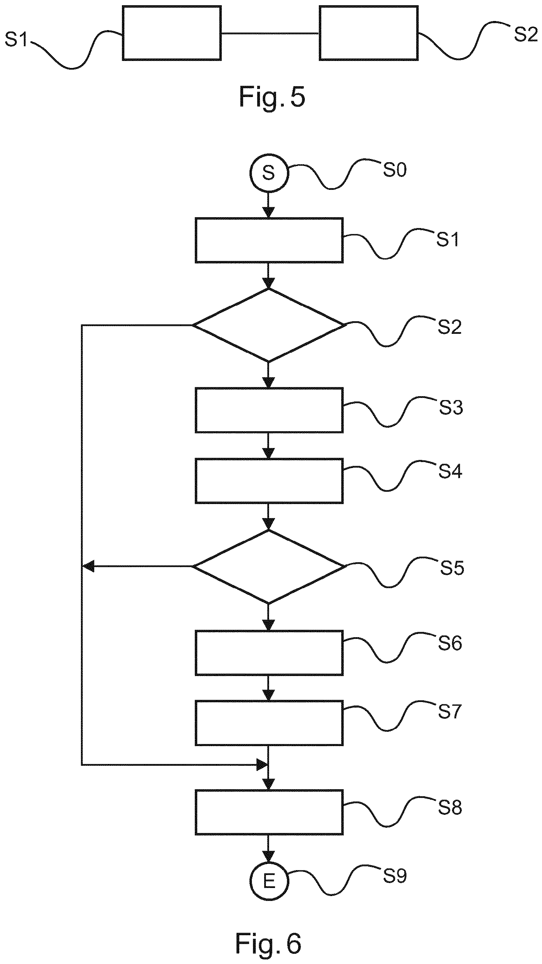

Figur 5 zeigt ein Flussdiagramm zur Illustration von Schritten eines Verfahrens zum Betreiben eines Füllstandmessgeräts 105 gemäß einem Ausführungsbeispiel. Bei dem Füllstandmessgerät 105 kann es sich um eines der mit Bezug auf voranstehende Figuren beschriebenen Füllstandmessgeräte 105 handeln.

Schritt S1 umfasst ein Ermitteln, mit einer Detektionseinheit 220 des Füllstandmessgeräts 105, eines eine Bewegung des Füllstandmessgeräts 105 indizierenden Bewegungssignals und/oder eines eine geographische Position des Füllstandmessgeräts 105 indizierenden Positionssignals.

Schritt S2 umfasst ein Betätigen, Aktivieren und/oder Deaktivieren, mit einer Steuereinheit 214 und/oder einer Aktivierungseinheit 216 des Füllstandmessgeräts 105, zumindest eines Teils eines Radarmoduls 204 des Füllstandmessgeräts 105 in Abhängigkeit des ermittelten Bewegungssignals und/oder in Abhängigkeit des ermittelten Positionssignals.

Figur 6 zeigt ein Flussdiagramm zur Illustration von Schritten eines Verfahrens zum Betreiben eines Füllstandmessgeräts 105 gemäß einem Ausführungsbeispiel. Bei dem Füllstandmessgerät 105 kann es sich um eines der mit Bezug auf voranstehende Figuren beschriebenen Füllstandmessgeräte 105 handeln.

Ein Messzyklus beginnt in einem Startzustand S0.

In einem Schritt S1 wird zunächst unter Verwendung der Detektionseinheit 220 und/oder eines Bewegungssensors 222 ein Bewegungssignal und/oder ein Bewegungswert B des Bewegungssignals ermittelt.

Im Schritt S2 wird anhand des Bewegungssignals überprüft, ob sich das Füllstandmessgerät 105 in Bewegung oder in einem Stillstand befindet.

Beispielsweise kann das Bewegungssignal binär sein und ein Bewegungswert B des Bewegungssignals ungleich Null kann anzeigen, dass das Füllstandmessgerät 105 in Bewegung ist. Ist dies der Fall, so ist vorgesehen, das Radarmodul 204, die Antenne 206 und/oder die Hochfrequenzeinheit 208 zumindest temporär zu deaktivieren, sodass kein Sendesignal emittiert werden kann. Das Verfahren mündet in diesem Fall in den Schritt S8.

Optional kann in Schritt S8 ein zuletzt ermittelter und/oder ein im Füllstandmessgerät 105 gespeicherter Messwert nach außen hin als aktueller Messwert bereitgestellt werden, etwa über die Kommunikationseinheit 218.

Ergibt die Prüfung in Schritt S2 jedoch, dass keine Bewegung des Füllstandmessgeräts 105 vorhanden ist und/oder sich das Füllstandmessgerät 105 in einem Stillstand befindet, so folgt auf den Schritt S2 der Schritt S3, in welchem mittels der Detektionseinheit 220 und/oder dem Positionssensor 224 die geographische Position P des Füllstandmessgeräts 105 und/oder ein damit korrelierendes Positionssignal bestimmt wird.

Im Schritt S4 wird das Positionssignal und/oder die ermittelte Position P mit einer Datenbank abgeglichen, um zu ermitteln, ob sich das Füllstandmessgerät 105 innerhalb eines Umkreises, einer Umgebung und/oder einer Zone um eine geschützte Einrichtung (z.B. eine Radioastronomiestation) befindet.

Im Schritt S5 wird sodann überprüft, ob der Datenbankabgleich die Position innerhalb einer geschützten Umgebung bestätigt. Ist dies der Fall, so ist vorgesehen, das Radarmodul 204, die Antenne 206 und/oder die Hochfrequenzeinheit 208 zumindest temporär zu deaktivieren, sodass kein Sendesignal emittiert werden kann. Das Verfahren mündet somit direkt in den Schritt S8.

Optional kann in Schritt S8 ein zuletzt ermittelter und/oder ein im Füllstandmessgerät 105 gespeicherter Messwert nach außen hin als aktueller Messwert bereitgestellt werden, etwa über die Kommunikationseinheit 218.

Ergibt die Prüfung in Schritt S5, dass sich das Füllstandmessgerät außerhalb des Umkreises einer geschützten Einrichtung befindet, so kann eine Füllstandmessung durchgeführt werden und das Verfahren kann in Schritt S6 fortgeführt werden, in welchem das Radarmodul 204, die Antenne 206 und/oder die Hochfrequenzeinheit 208 aktiviert wird, sodass ein Sendesignal, etwa ein Sendesignal mit einer Frequenz von 6 GHz oder höher, über die Antenne 206 abgestrahlt wird.

Im Schritt S7 werden das vom Medium reflektierte Empfangssignal von der Steuereinheit 214 analysiert, und ein mit dem Füllstand korrelierendes Messsignal und/oder Messwert (bzw. Füllstandwert) wird bestimmt. Optional kann der bestimmte Messwert im Speicher 219 des Füllstandmessgerätes 105 zwischengespeichert und/oder hinterlegt werden.

Im Schritt S8 wird der Messwert über eine Kommunikationseinrichtung 218 vorzugsweise in drahtloser Form einer übergeordneten Steuerung, einer Leitstelle, einem Empfänger und/oder einem Server bekannt gemacht.

Der Messzyklus endet sodann im Schritt S9.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Füllstandmessgerät (105) zur Ermittlung eines Füllstandes eines Mediums, das Füllstandmessgerät (105) aufweisend:
ein Radarmodul (204) zum Aussenden eines Sendesignals und zum Empfangen eines an dem Medium reflektierten Empfangssignals;
eine Steuereinheit (214), welche dazu eingerichtet ist, basierend auf dem Empfangssignal ein mit dem Füllstand korrelierendes Messsignal zu ermitteln; und
eine Detektionseinheit (220), die dazu eingerichtet ist, ein eine Bewegung des Füllstandmessgeräts (105) indizierendes Bewegungssignal und/oder ein eine geographische Position des Füllstandmessgeräts (105) indizierendes Positionssignal zu ermitteln;
wobei die Steuereinheit (214) eine Aktivierungseinheit (216) aufweist, welche dazu eingerichtet ist, das Radarmodul (204) zumindest teilweise in Abhängigkeit des von der Detektionseinheit (220) ermittelten Bewegungssignals und/oder Positionssignals zu aktivieren und/oder zu deaktivieren.

2. Füllstandmessgerät (105) nach Anspruch 1,
wobei die Aktivierungseinheit (216) der Steuereinheit (214) dazu eingerichtet ist, das Radarmodul (204) basierend auf dem Bewegungssignal und/oder Positionssignal derart zu betätigen, dass das Radarmodul (204) ausschließlich während eines Stillstandes des Füllstandmessgeräts (105) das Sendesignal sendet.

3. Füllstandmessgerät (105) nach einem der voranstehenden Ansprüche,
wobei die Aktivierungseinheit (216) dazu eingerichtet ist, basierend auf dem Bewegungssignal und/oder dem Positionssignal zu ermitteln, ob sich das Füllstandmessgerät (105) im Umkreis einer geschützten Einrichtung, insbesondere im Umkreis einer Radioastronomiestation, befindet; und
wobei die Aktivierungseinheit (216) dazu eingerichtet ist, das Radarmodul (204) zumindest teilweise zu deaktivieren, wenn sich das Füllstandmessgerät (105) im Umkreis der geschützten Einrichtung befindet.

4. Füllstandmessgerät (105) nach Anspruch 3,
wobei das Positionssignal eine aktuelle geographische Position des Füllstandmessgeräts (105) repräsentiert und/oder mit einer aktuellen Position des Füllstandmessgeräts (105) korreliert; und
wobei die Aktivierungseinheit (216) dazu eingerichtet ist, basierend auf einem Vergleich der aktuellen Position des Füllstandmessgeräts (105) mit Positionsdaten, welche den Umkreis der geschützten Einrichtung definieren, zu ermitteln, ob sich das Füllstandmessgerät (105) im Umkreis der geschützten Einrichtung befindet.

5. Füllstandmessgerät (105) nach einem Anspruch 4,
wobei die Positionsdaten, welche den Umkreis der geschützten Einrichtung definieren, in einem Speicher (219) des Füllstandmessgeräts (105) hinterlegt sind; und/oder
wobei das Füllstandmessgerät (105) dazu eingerichtet ist, die Positionsdaten, welche den Umkreis der geschützten Einrichtung definieren, über eine Fernabfrage abzurufen.

6. Füllstandmessgerät (105) nach einem der voranstehenden Ansprüche,
wobei die Detektionseinheit (220) wenigstens einen Sensor (222, 224) zur Ermittlung des Bewegungssignals und/oder des Positionssignals aufweist, wobei der wenigstens eine Sensor (222, 224) ausgewählt ist aus der Gruppe bestehend aus Dopplersensor, Beschleunigungssensor, Gyrosensor, Vibrationssensor, Erdmagnetfeldsensor und Positionssensor.

7. Füllstandmessgerät (105) nach einem der voranstehenden Ansprüche,
wobei die Detektionseinheit (220) dazu eingerichtet ist, ein erstes Positionssignal zu einem ersten Zeitpunkt und ein zweites Positionssignal zu einem zweiten Zeitpunkt zu ermitteln, welcher sich von dem ersten Zeitpunkt unterscheidet; und
wobei die Detektionseinheit (220) dazu eingerichtet ist, das Bewegungssignal basierend auf einem Vergleich des ersten Positionssignals und des zweiten Positionssignals zu ermitteln.

8. Füllstandmessgerät (105) nach einem der voranstehenden Ansprüche, ferner aufweisend:
eine Kommunikationseinheit (218), welche dazu eingerichtet ist, das Messsignal und/oder einen mit dem Messsignal korrelierenden Messwert drahtlos und/oder über ein Drahtlosnetzwerk an einen Empfänger zu übermitteln.

9. Füllstandmessgerät (105) nach Anspruch 8,
wobei die Detektionseinheit (220) mit der Kommunikationseinheit (218) gekoppelt ist; und
wobei die Detektionseinheit (220) dazu eingerichtet ist, das Bewegungssignal und/oder das Positionssignal basierend auf über die Kommunikationseinheit (218) empfangenen Positionsdaten zu ermitteln.

10. Füllstandmessgerät (105) nach einem der voranstehenden Ansprüche,
wobei die Detektionseinheit (220) zumindest teilweise in der Steuereinheit (216) integriert ist.

11. Füllstandmessgerät (105) nach einem der voranstehenden Ansprüche
wobei das Radarmodul (204) eine Hochfrequenzeinheit (208) zur Erzeugung des Sendesignals sowie eine Antenne (206) zum Abstrahlen des Sendesignals und zum Empfangen des Empfangssignals aufweist; und
wobei die Aktivierungseinheit (216) dazu eingerichtet ist, die Hochfrequenzeinheit (208) und/oder die Antenne (206) in Abhängigkeit des von der Detektionseinheit (220) ermittelten Bewegungssignals und/oder Positionssignals zu aktivieren und/oder zu deaktivieren.

12. Füllstandmessgerät (105) nach einem der voranstehenden Ansprüche,
wobei das Füllstandmessgerät (105) ferner ein Gehäuse (202) aufweist, welches das Radarmodul (204), die Steuereinheit (214) und die Detektionseinheit (220) vollständig und/oder permanent umschließt; und/oder
wobei das Füllstandmessgerät (105) nach außen vollständig kabellos ausgeführt ist.

13. Füllstandmessgerät (105) nach einem der voranstehenden Ansprüche, ferner aufweisend:
eine Energieversorgungseinheit (210), welche in einem Gehäuse (202) des Füllstandmessgeräts (105) angeordnet ist und welche dazu eingerichtet ist, das Radarmodul (204), die Steuereinheit (214) und die Detektionseinheit (220) mit elektrischer Energie zu versorgen.

14. Verwendung des Füllstandmessgeräts (105) nach einem der voranstehenden Ansprüche als Grenzstandschalter zur Ermittlung eines Grenzstandes des Mediums.

15. Verfahren zum Betreiben eines Füllstandmessgeräts (105) nach einem der Ansprüche 1 bis 13, das Verfahren aufweisend die Schritte:
Ermitteln, mit einer Detektionseinheit (220) des Füllstandmessgeräts, eines eine Bewegung des Füllstandmessgeräts indizierenden Bewegungssignals und/oder eines eine geographische Position des Füllstandmessgeräts indizierenden Positionssignals; und
Aktivieren und/oder Deaktivieren, mit einer Steuereinheit (214) des Füllstandmessgeräts, zumindest eines Teils eines Radarmoduls (204) des Füllstandmessgeräts in Abhängigkeit des ermittelten Bewegungssignals und/oder in Abhängigkeit des ermittelten Positionssignals.
